Europäisches Patentamt

European Patent Office

Office européen des brevets

(19)

(11) Publication number: **0 019 991**
A2

# (12) EUROPEAN PATENT APPLICATION

(21) Application number: 80300893.7

(51) Int. Cl.³: **F 24 D 11/00**

(22) Date of filing: **21.03.80**

(30) Priority: **04.06.79 IT 4571979**

(43) Date of publication of application: **10.12.80**
Bulletin 80/25

(84) Designated Contracting States: **CH DE FR GB IT NL**

(71) Applicant: **INDUSTRIE ZANUSSI S.p.A., Viale Treviso 15, I-33170 Pordenone (IT)**

(72) Inventor: **Balduzzi, Franco, Via Filippino Lippi 16, I-20131 Milano (IT)**

(74) Representative: **Ayers, Martyn Lewis Stanley et al, J.A. KEMP & CO. 14 South Square Gray's Inn, London, WC1R 5EU (GB)**

(54) Solar energy heating installation.

(57) A solar energy heating installation comprises a primary receiving circuit and a secondary user circuit, connected by way of a heat exchanger. The secondary circuit comprises heat storage means (15), a pump (17), for circulating the service fluid and means (16) for using the heat carried by the service fluid, a first branch (20) of said user circuit forming a connecting conduit which is common between the heat exchanger (12), the storage means (15) and the means (16), while the pump is inserted in a second branch of said secondary circuit; and on the one hand is connected by means of valves (18—21, 22) to the exchanger and the storage means and on the other hand is connected by means of further respective valves (19—23, 24) to the users (16) and to the storage means, the valves being actuable in such a way as to put in communication selectively in pairs the exchanger (12), the storage means (15) and the users (16), by way of the pump (17).

- 1 -

DESCRIPTION

SOLAR ENERGY HEATING INSTALLATION

The present invention relates to a solar energy heating installation.

In particular, the invention relates to an installation of a type comprising a primary circuit for receiving the solar energy and a secondary user circuit, the circuits being separated from each other.

In a first known construction of the above type of installation, the two circuits are connected together by way of a storage tank within which there is disposed a heat exchanger. The primary circuit is filled with heat-carrying fluid which normally comprises distilled water with the addition of antifreeze and anti-corrosion fluids. On the other hand, the secondary circuit is filled with water from the water main, which is circulated by means of pumps between the storage tank and the heat-user devices (radiators, blower convectors, radiant panels, etc.).

Also known are installations in which the storage tank is separated from the heat exchanger, being inserted in the secondary user circuit to permit a greater degree of freedom in regard to design of the installation itself.

In both cases, operation of the installation permits only use of the heat stored in the storage tank, and the transfer of heat from the heat exchanger to the storage means and from the storage means to the users can take place at different times or simultaneously.

However, this kind of operation is not

-2-

satisfactory since the transfer of heat from the receiving elements of the primary circuit to the users of the secondary circuit takes place only by way of the storage means and therefore requires that a sufficient thermal level is reached in the storage means before being able to supply the users effectively. In consequence such transfer of heat normally takes place with a certain delay, due to the necessity to raise the storage means to operating temperature.

A further disadvantage is that, when the temperature of the fluid in the storage tank is higher than the minimum temperature necessary for use, the efficiency of the solar collectors in the primary circuit is correspondingly lower, independently of the amount of solar energy which can be received by the collectors. In fact, the heat would have to be transferred to a fluid which is at high temperature in the storage means and would thus require an even higher temperature in the primary fluid, which causes a higher degree of dispersion of heat in the collectors.

The aim of the present invention is to permit better use of the solar energy in a heating installation with a primary circuit and a secondary circuit which are separate from each other and to reduce to the minimum the functional components of the installation. In particular, the invention seeks to make it possible to transfer heat directly from the receiving circuit to the users (by way of the exchanger) without having to pass by way of the storage means.

This aim is achieved in a solar energy heating installation comprising a primary receiving circuit and a secondary user circuit, said circuits

- 3 -

being separated from each other and connected by way of a heat exchanger, the secondary circuit comprising heat storage means, means for circulating the service fluid and means for using the heat carried by the service fluid. The installation according to the invention is characterised in that a first branch of the secondary circuit forms a connecting conduit which is common as between the heat exchanger, the storage means and the heat using means, the circulating means being disposed in a second branch of said secondary circuit and on the one hand being connected by means of respective valve means to the exchanger and to the storage means and on the other hand being connected by way of further respective valve means to the heat using means and to the storage means, said valve means being actuable in such a way as to put in communication selectively in pairs said exchanger, said storage means and said user means, by way of said circulating means.

The invention will be further described by way of non-limiting example with reference to the accompanying drawing wherein:

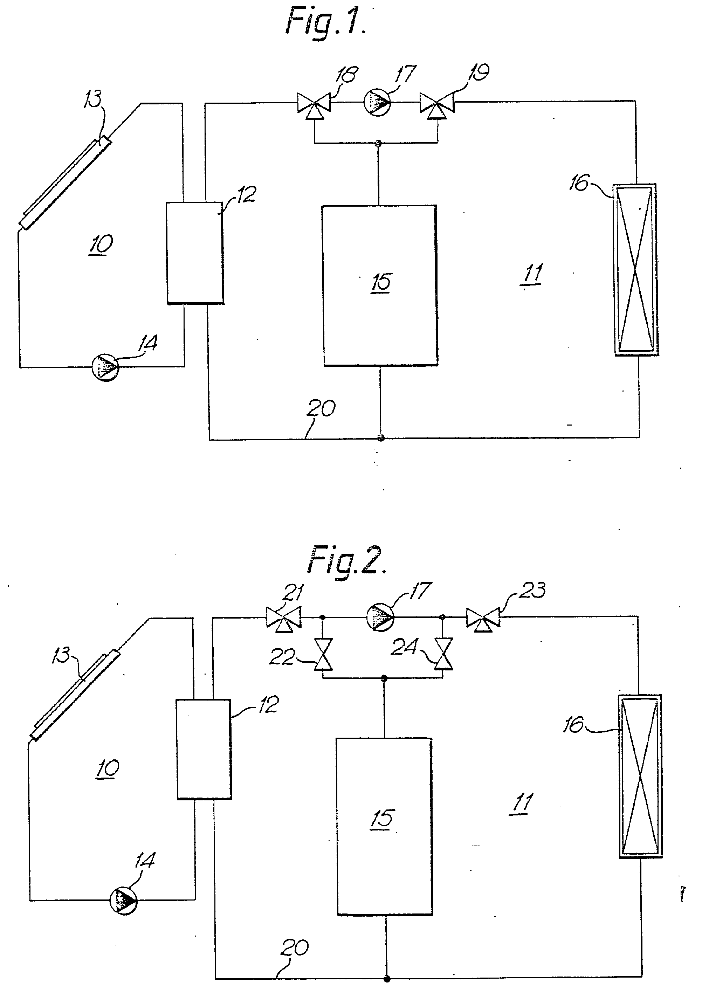

Figures 1 and 2 respectively show diagrammatic views of two embodiments of the present invention.

The Figures show only the principal components of the installation, and in particular clearly show the primary receiving or pick-up circuit 10 and the secondary user circuit 11 which are separate and connected together by way of the heat exchanger 12.

With this arrangement, the fluid in the primary circuit is not mixed with that in the secondary circuit and the extent of the primary circuit can be reduced to the minimum size, reducing the amount of special fluid required for filling the primary circuit.

-4-

The primary circuit 10 essentially comprises the solar collectors 13 and a circulating pump 14. The control and regulating means which are necessary both for the primary circuit and for the secondary circuit are omitted from the description and the drawings because they are of _per se_ known type and do not constitute original designs for carrying the present invention into effect.

The secondary circuit 11 essentially comprises a storage means 15, the heat using means 16 and a circulating pump 17. The heat using means 16 may, for example, comprise one or more radiators.

In figure 1 the secondary circuit further comprises two three-way valves 18 and 19 which are disposed respectively upstream and downstream of the pump 17 in a first branch of the circuit. The valve 18 is connected to the exchanger 12, the storage means 15 and the intake side of the pump 17 and can be actuated in such a way as to communicate the intake of the pump 17 alternatively with the exchanger 12 and with the storage means 15.

The valve 19 is connected to the users 16, the storage means 15 and the discharge side of the pump 17 and can be actuated in such a way as to communicate the discharge of the pump 17 selectively with the storage means 15 and the users 16.

In addition, the exchanger 12, the storage means 15 and the users 16 are connected to a common conduit 20 forming the second branch of the secondary circuit 11.

The mode of operation of the above-described installation is as follows:

When the collectors 13 are operating, that is to say, are absorbing solar energy, and the pump 14 circulates the fluid in the primary circuit 10 and at the same time the users service 16 call for heat, the pump 17 is actuated and the valves 18 and 19 are so positioned as to cause the fluid in the secondary circuit to circulate directly between the exchanger 12 and the users 16 (that is to say, without passing through the storage means 15).

The solar energy received can thus be immediately transmitted to the users, thus avoiding any delays due to the inertia resulting from the necessity to raise the body of fluid contained in the storage means 15 to the operating temperature.

When the collectors 13 are operating but the users 16 are not calling for heat, the valves 18 and 19 are so positioned that the fluid in the secondary circuit 11, displaced by operation of the pump 17, circulates directly between the exchanger 12 and the storage means 15, with heat being stored in the latter. This therefore avoids possible losses due to the hot fluid passing through the users 16.

When the collectors 13 are not receiving solar energy and the users 16 call for heat, the valves 18 and 19 are so positioned that the fluid in the secondary circuit is circulated, by virtue of the pump 17, between the storage means 15 and users 16.

Figure 2 shows an alternative form of the installation of Figure 1, wherein each three-way valve is replaced by a pair of shut-off valves 21, 22 and 23, 24 which, as will be clearly seen, permit the same operational alternatives as already described with respect to the Figure 1 construction.

The illustrated embodiments achieve the proposed aims, that is to say, that of being able to use directly the solar energy received, avoiding the delays which are introduced by passing fluid through the service, and that of reducing to the minimum the functional elements required while providing for complete operational separation as between the circuits. In addition, the invention provides all the known advantages deriving from an installation with separate primary and secondary circuits (reduced amount of heat carrying fluid in the primary circuit, a higher degree of freedom in the structural design in particular of the secondary circuit, etc).

It will be apparent that the installation according to the invention can be suitably completed with all the control and actuating devices required and may be modified with further accessory components, in particular in dependence on the various types of users (radiators, blower convectors, radiant panels, etc) without departing from the scope of the present invention.

- 7 -

CLAIM

1. A solar energy heating installation comprising a primary receiving circuit and a secondary user circuit, said circuits being separate and connected by way of a heat exchanger, the secondary circuit comprising heat storage means, means for circulating the service fluid and means for using the heat carried by the service fluid, characterised in that a first branch (20) of said user circuit forms a connecting conduit which is common between the heat exchanger (12), the storage means (15) and the heat using means (16), the circulating means (17) being in a second branch of said secondary circuit, and on the one hand being connected by means of respective valve means (18-21, 22) to the exchanger and the storage means and on the other hand being connected by means of further respective valve means (19-23, 24) to the heat using means and to the storage means, said valve means being actuable in such a way as to put in communication selectively in said exchanger (12), said storage means (15) and said heat using means (16), by way of said circulating means (17).

## Fig.1.

## Fig.2.